# EUROPÄISCHE PATENTANMELDUNG

(11) **EP 2 720 016 A1**
(43) Veröffentlichungstag der Anmeldung: **16.04.2014**
(21) Anmeldenummer: 12006982.8
(22) Anmeldetag: 09.10.2012
(51) Int. Cl.: G01K 11/32, B01D 3/00, B01J 8/00, F25J 1/00, F25J 3/00, B01D 53/14, B01D 53/18, B01D 53/78

(54) **Verfahren zum Messen eines Temperaturprofils in einer Kolonne zum Stoff- und/oder Energieaustausch**

(71) Anmelder: Linde Aktiengesellschaft, 80331 München (DE)
(72) Erfinder: Ferstl, Johann, 80995 München (DE); Flüggen, Rainer, 83673 Bichl (DE); Moll, Anton, 82399 Raisting (DE); Steinbauer, Manfred, 82399 Raisting (DE); von Gemmingen, Ulrich, 82541 Ammerland b. Münsing (DE)
(74) Vertreter: Meilinger, Claudia Sabine

(57) **Zusammenfassung**

Verfahren zum Messen eines Temperaturprofils in einer Kolonne zum Stoff- und/oder Energieaustausch, bei dem mittels zumindest eines in der Kolonne (2) angeordneten Lichtwellenleiters (100), insbesondere in Form einer Glasfaser, ein momentanes Temperaturprofil in zumindest einem Kolonneneinbau (20) der Kolonne gemessen wird, wobei Licht in den Lichtwellenleiter (100) eingekoppelt wird und im Lichtwellenleiter (100) gestreutes Licht zur Ermittlung des momentanen Temperaturprofils ausgewertet wird.

## Beschreibung

Die Erfindung betrifft ein Verfahren zum Messen eines Temperaturprofils in einer Kolonne zum Stoff- und/oder Energieaustausch.

Derartige Kolonnen sind aus dem Stand der Technik bekannt und dienen dem intensiven Kontakt und dem Stoff- und/oder Energieaustausch zwischen einer gasförmigen und einer flüssigen Phase. Die gasförmige und die flüssige Phase passieren dabei aneinander im Gegenstrom, wobei die gasförmige Phase zumeist von unten nach oben durch die Kolonne geführt wird. Derartige Kolonnen können zum Beispiel zum Reinigen einer Gasphase mit einem flüssigen Waschmittel eingesetzt werden.

Zum Intensivieren des Stoffaustausches bzw. zum Bereitstellen einer möglichst großen Phasengrenzfläche weisen derartige Kolonnen Einbauten auf, die entlang der Längsachse der Kolonne übereinander angeordnet sein können, wobei es sich bei derartigen Einbauten insbesondere um regellose Füllkörperschüttungen, strukturiere Packungen aber auch um einen oder mehrere Kolonnenböden (Austauschböden) handeln kann. Die gasförmige Phase strömt dabei von unten nach oben in diese Einbauten, während die flüssige Phase von oben auf die besagten Einbauten aufgegeben wird.

Insbesondere bei Kolonnen mit Stoffaustauschabschnitten in Form von Füllkörperschüttungen oder strukturierten Packungen, hängt die radiale Verteilung der Phasen neben der Anfangsverteilung der jeweiligen Phase beim Eintritt in den jeweiligen Stoffaustauschabschnitt auch von der hydraulischen Belastung ab. Es ist bekannt, dass bei regelosen Schüttfüllkörpern beispielsweise die ablaufende Flüssigkeit zur Akkumulation im Wandbereich der Kolonne neigt und dadurch auch die Homogenität der Gasströmung beeinflusst wird. Diese Maldistribution beeinflusst die Wirksamkeit des Stoff- und Wärmeaustauschs zwischen den einzelnen Phasen erheblich. Bei strukturierten Packungen kommt es vor allem bei höheren Kolonnendrücken zur Ausbildung einer Fehlverteilung der Phasen, die stark von der Kolonnenbelastung beeinflusst wird. Hiervon ausgehend liegt der vorliegenden Erfindung daher die Aufgabe zu Grunde, ein Verfahren und eine Einrichtung zum Messen eines Temperaturprofils in einer Kolonne der vorgenannten Art bereit zu stellen, mit der derartige Fehlverteilungen besser erfasst werden können bzw. diesen Fehlverteilungen entgegengewirkt werden kann.

Dieses Problem wird durch ein Verfahren mit den Merkmalen des Anspruchs 1 gelöst.

Danach ist vorgesehen, dass bei dem erfindungsgemäßen Verfahren mittels zumindest eines in der Kolonne angeordneten Lichtwellenleiters, insbesondere in Form einer Glasfaser oder einer sonstigen optischen Faser, ein momentanes Temperaturprofil in zumindest einem Kolonneneinbau der Kolonne gemessen wird, wobei Licht in die Lichtwellenleiter eingekoppelt wird und im Lichtwellenleiter gestreutes Licht zur Ermittlung des momentanen Temperaturprofils ausgewertet wird.

Bevorzugt ist vorgesehen, dass als momentanes Temperaturprofil ein zwei- oder dreidimensionales momentanes Temperaturprofil des mindestens einen Kolonneneinbaus gemessen wird. Dies ist möglich, da bei der Temperaturmessung mittels des Lichtwellenleiters entlang des Lichtwellenleiters eine Vielzahl von dicht beieinanderliegenden Messorten existiert, in denen jeweils eine Temperatur durch Auswertung der von diesem Messort zurückgestreuten Lichtes erhalten werden kann. Durch entsprechendes Verlegen des mindestens einen Lichtwellenleiters in dem mindestens einen besagten Kolonneneinbau kann daher ein zwei- bzw. dreidimensionales Temperaturprofil des Kolonneneinbaus vermessen werden, was eine exakte Vermessung der Kolonne gestattet.

Hierzu verläuft der mindestens eine Lichtwellenleiter zum Messen des momentanen Temperaturprofils insbesondere spiralförmig in oder auf dem mindestens einen Kolonneneinbau. Ggf. ist auch ein helixförmiger Verlauf des mindestens einen Lichtwellenleiters in dem Kolonneneinbau denkbar (z.B. bei einer Schüttung).

Vorzugsweise wird der mindestens eine Kolonneneinbau von oben mit einer flüssigen Phase beaufschlagt, wobei im Gegenstrom eine gasförmige Phase durch den mindestens einen Kolonneneinbau geführt wird, so dass die beiden Phasen in dem mindestens einen Kolonneneinbau in ein Stoff- und/oder Energieaustausch treten. Vorzugsweise handelt es sich bei dem mindestens einen Kolonneneinbau um eine Füllkörperschüttung oder eine strukturierte Packung. Es ist auch denkbar, dass ein solcher Kolonneneinbau durch einen oder mehrere Kolonnenböden (Austauschböden) gebildet ist. Bei derartigen Austauschböden wird die gasförmige Phase durch eine Mehrzahl an Kamine in einer auf dem jeweiligen Austauschboden stehende flüssige Phase eingeperlt.

Bevorzugt wird weiterhin bei dem erfindungsgemäßen Verfahren anhand des (wiederholt) gemessenen momentanen Temperaturprofils ein jeweils zugeordnetes momentanes Konzentrationsprofil der den mindestens einen Kolonneneinbau benetzenden flüssigen Phase und/oder der den Kolonneneinbau im Gegenstrom durchströmenden gasförmigen Phase ermittelt. Als weitere Größe zur Ermittlung solcher Konzentrationsprofile ist nur noch der in der Kolonne herrschende Druck nötig, der gemessen werden kann oder durch den bekannten Druckverlust über einen Kolonneneinbau (zum Beispiel strukturierte Packung) bestimmt werden kann.

Weiterhin kann natürlich mittels des mindestens einen Lichtwellenleiters je ein momentanes Temperaturprofil in einer Mehrzahl an Kolonneneinbauten der Kolonne gemessen werden. Hierbei kann sich der mindestens eine Lichtwellenleiter zum Messen der momentanen Temperaturprofile von Kolonneneinbau zu Kolonneneinbau erstrecken, wobei insbesondere der mindestens eine Lichtwellenleiter in bzw. auf dem jeweiligen Kolonneneinbau spiralförmig verläuft (siehe oben). Insbesondere kann der mindestens eine Lichtwellenleiter durch die Mitte des jeweiligen Einbaus (z.B. Packung) oder entlang dessen Randes zum nächsten Einbau nach oben oder unten verlegt werden. Natürlich können auch bei einem oder mehreren Kolonneneinbauten eine Mehrzahl an Lichtwellenleitern für eine möglichst genaue dreidimensionale Bestimmungen des jeweiligen Temperaturprofils verwendet werden.

Auch bei einer Mehrzahl an Kolonneneinbauten wird bevorzugt anhand der jeweiligen momentanen Temperaturprofile je ein Konzentrationsprofil der den jeweiligen Kolonneneinbau benetzten flüssigen Phase und/oder der den jeweiligen Kolonneneinbau im Gegenstrom durchströmenden gasförmigen Phase ermittelt.

Im Ergebnis erhält man somit ein dreidimensionales Temperaturprofil/ Konzentrationsprofil der gesamten Kolonne. Mit der erfindungsgemäßen Maßnahme kann somit die Wirksamkeit von jedem Kolonneneinbau bestimmt werden. Zum anderen können durch gezielte Flüssigkeitsaufgabe eines variablen Verteilers die Konzentrationsprofile der einzelnen Einbauten in radialer Richtung oder gegebenenfalls auch in Umfangsrichtung des jeweiligen Einbaus optimiert werden.

Durch die quantitative Erfassung der Maldistribution über der (Bett)höhe eines Kolonneneinbaus (Füllkörperschüttung oder Packung) ist es somit insbesondere möglich, durch gezielte Steuerung der Anfangsverteilung der Phasen den Stoffübergang zu jedem Belastungspunkt zu optimieren.

So ist gemäß einer Variante des erfindungsgemäßen Verfahrens vorgesehen, dass die flüssige Phase derart auf den mindestens einen Kolonneneinbau oder eine Mehrzahl an Kolonneneinbauten gegeben wird, dass das momentane Konzentrationsprofil der flüssigen Phase in dem mindestens einen Kolonneneinbau einen gewünschten Konzentrationsprofil der flüssigen Phase angenähert wird und/oder dass das momentane Konzentrationsprofil der gasförmigen Phase in dem mindestens einen Kolonneneinbau einem gewünschten Konzentrationsprofil der gasförmigen Phase angenähert wird.

Es kann natürlich auch eine Regelung des jeweiligen Temperaturprofils selbst vorgenommen werden. Hierzu wird bevorzugt die flüssige Phase derart auf den mindestens einen Kolonneneinbau gegeben, dass das jeweilige momentane Temperaturprofil des mindestens einen Kolonneneinbaus einem gewünschten Temperaturprofil (Sollprofil) angenähert wird.

Weiterhin wird das erfindungsgemäße Problem durch einen Einrichtung gelöst, die insbesondere zur Verwendung bei dem erfindungsgemäßen Verfahren dient.

Gemäß Anspruch 9 weist eine derartige Einrichtung eine Kolonne zum Stoff- und/oder Energieaustausch auf, zumindest einen Kolonneneinbau der Kolonne zur Aufnahme einer flüssigen Phase und zumindest einen im oder auf dem mindestens einen Kolonneneinbau angeordneten Lichtwellenleiter, insbesondere in Form einer Glasfaser oder einer sonstigen optischen Faser, zum Messen eines insbesondere zwei- oder dreidimensionalen, momentanen Temperaturprofils in dem mindestens einen Kolonneneinbau, wobei insbesondere der mindestens eine Kolonneneinbau durch eine Füllkörperschüttung, eine strukturierte Packung oder zumindest einen oder mehrere Kolonnenböden (Austauschböden) gebildet ist. Eine Kombination derartiger Einbauten ist auch denkbar.

Vorzugsweise ist vorgesehen, dass sich der mindestens eine Lichtwellenleiter spiralförmig erstreckt. Bei mehreren Einbauten kann der mindestens eine Lichtwellenleiter von Einbau zu Einbau verlegt werden, wobei er sich dann jeweils im Bereich des jeweiligen Einbaus spiralförmig erstreckt, so dass im Bereich des jeweiligen Einbaus ein möglichst dreidimensionales Temperaturprofil erfassbar ist.

Weiterhin weist die Einrichtung bevorzugt eine mit dem mindestens einen Lichtwellenleiter verbundene Messeinrichtung auf, die dazu ausgebildet ist, Licht in den mindestens einen Lichtwellenleiter einzukoppeln und in dem mindestens einen Lichtwellenleiter gestreutes Licht zur Ermittlung des momentanen Temperaturprofils auszuwerten.

Zur Auswertung des gestreuten Lichts wird bevorzugt eine Messeinrichtung mit dem mindestens einem Lichtwellenleiter verbunden, die dazu eingerichtet und vorgesehen ist, mittels des besagten Lichtwellenleiters das momentane Temperaturprofil im jeweiligen Kolonneneinbau zu messen.

Die besagte Messeinrichtung ist hierzu bevorzugt dazu ausgebildet bzw. wird dazu verwendet, in den mindestens einen Lichtwellenleiter Licht (optische Signale) einzuleiten und in den Lichtleiter zurückgestreutes Licht in bekannter Weise auszuwerten. Hierbei wird ausgenutzt, dass die in dem Lichtwellenleiter eingesandten und zurückgestreuten optischen Signale stark temperaturabhängig und daher zur Temperaturmessung in der Umgebung des Lichtwellenleiters geeignet sind. Zur Auswertung solcher optischen Signale des Lichtleiters existieren mehrere Verfahrensweisen, die es erlauben, die Temperatur an einem beliebigen Punkt des Lichtleiters mit ausreichend hoher Präzision zu bestimmen.

In einer bevorzugten Ausführungsform des erfindungsgemäßen Verfahrens/Einrichtung ist die Messeinrichtung dazu eingerichtet und vorgesehen, durch den mindestens einen Lichtwellenleiter zurückgestreutes Licht auszuwerten, das durch Raman-Streuung des in den Lichtleiter eingeleiteten Lichtes entsteht. Hierbei wird ausgenutzt, dass Lichtwellenleiter in der Regel aus dotiertem Quarzglas (amorphe FestKörperstruktur, bestehend hauptsächlich aus Siliziumdioxid) gefertigt sind. In derartigen amorphen Festkörperstrukturen werden über thermische Effekte Gitterschwingungen induziert. Solche Gitterschwingungen sind temperaturabhängig. Licht, welches auf die Moleküle bzw. Partikel im Lichtleiter trifft, tritt daher in Wechselwirkung mit den Elektronen der Moleküle. Diese Wechselwirkung wird auch als Ramanstreuung bezeichnet. Das zurückgestreute Licht lässt sich in drei spektrale Gruppen einteilen. Neben der Rayleigh-Streuung, welche der Wellenlänge des eingestrahlten Lichts entspricht, existieren die sogenannte Stokes- und die sogenannten Anti-Stokes-Komponenten. Im Gegensatz zu den zu höheren Wellenlängen verschobenen und nur gering temperaturabhängigen Stokes-Komponenten sind die zu kleineren Wellenlängen verschoben Anti-Stokes-Komponenten deutlich temperaturabhängig. Die Messeinrichtung ist daher vorzugsweise dazu ausgebildet, das Intensitätsverhältnis zwischen Stokes- und Anti-Stokes-Komponenten zu berechnen, wobei die Messeinrichtung vorzugsweise dazu ausgebildet ist, hierzu eine Fourier-Transformation dieser beiden rückgestreuten Komponenten zu berechnen und mit einer Fourier-Transformation eines Referenzsignals zu vergleichen. Hieraus erhält man die Intensitäten der beiden Komponenten über der Länge des Lichtwellenleiters. Somit kann über den Vergleich der beiden Intensitäten die Temperatur für jeden Punkt des Lichtwellenleiters ermittelt werden.

Gemäß einer weiteren Variante des erfindungsgemäßen Verfahrens/Einrichtung ist vorgesehen, dass die Temperaturbestimmung durch Auswertung der Rayleigh-Streuung erfolgt. Hierzu weist die Messeinrichtung bevorzugt ein kohärentes Frequenzbereichsreflektometer (c-OFDR für coherent Optical Frequency Domain Reflectometer) auf, bei dem Licht eines durchstimmbaren Lasers in ein Mach-Zehnder-Interferometer eingekoppelt wird, das das Licht auf zwei Strecken aufteilt, wobei der Lichtwellenleiter die eine Strecke bildet und die andere Strecke eine Referenzstrecke bekannte Länge ist. Das Rayleigh-Streulicht aus dem Lichtwellenleiter wird mit dem Lichtanteil aus der Referenzstrecke überlagert und detektiert. Beim Durchstimmen der Laserwellenlänge entsteht dabei am Detektor ein periodisches Signal, dessen Frequenz vom jeweiligen Streuort des Lichtwellenleiters abhängt. Die einzelnen Frequenzen dieses Signals, die über eine Fourier-Transformation erhältlich sind, entsprechen somit den Streuorten in dem Lichtwellenleiter; die Amplitude ihres Frequenzanteils gibt die Intensität der jeweiligen Reflexion an. Hierbei lassen sich Auflösungen ≤ 0,1 mm erzielen.

Die Rayleigh-Strahlung in einem Lichtwellenleiter, wie zum Beispiel einer Glasfaser, entsteht durch elastische Streuprozesse an lokalen Effekten/Störungen des Lichtwellenleiters. Wird eine solche Glasfaser mittels c-OFDR abgetastet, ergibt sich ein für die Glasfaser charakteristischer, fluktuierender Intensitätsverlauf der Rayleigh-Streuung entlang der Glasfaser, der bei einer Temperaturänderung (Änderung der räumlichen Ausdehnung der Faser) räumlich gestreckt bzw. gestaucht wird, wodurch die Temperatur entlang der Glasfaser berechnet werden kann. Die Messeinrichtung ist entsprechend bevorzugt konfiguriert, das Signal entlang der Glasfaser in benachbarte Segmente (≥ 1 mm) zu zerlegen und das entsprechende Signal in den Frequenzraum zu transformieren. Für jedes Segment ergibt sich dabei ein fluktuierendes Reflexionsmuster in Abhängigkeit von der Frequenz. Änderung der Temperatur bzw. Dehnung der Glasfaser bedingen eine Frequenzverschiebung, die insbesondere proportional zur Temperaturänderung der Glasfaser in jeweiligem Segment ist. Die Messeinrichtung ist entsprechend bevorzugt dazu ausgebildet, an Hand der jeweiligen Frequenzverschiebung die (lokale) Temperatur der Glasfaser bzw. des Lichtwellenleiters zu ermitteln.

In einer weiteren Ausführungsform des erfindungsgemäßen Verfahrens/Einrichtung erfolgt die Temperaturmessung über die Auswertung von optischen Signalen, wie sie durch Brillouin-Streuung des Lichtwellenleiters entstehen. In diesem Fall basiert die Temperaturmessung auf der ortsaufgelösten Bestimmung der Referenzfrequenz zwischen der in den Lichtwellenleiter eingeleiteten, primären Lichtwelle und der durch die in Folge von Brillouin-Streuung im Lichtleiter induzierten und zurückgestreuten Welle, welche in ihrer Frequenz in Abhängigkeit von der Temperatur gegenüber der Primärwelle verringert ist. Die Messeinrichtung ist daher vorzugsweise dazu ausgebildet, eine pulsförmige Primärlichtwelle in dem Lichtleiter einzuleiten und das rückgestreute Licht zeitaufgelöst für verschiedene Frequenzdifferenzen zu detektieren und unter Kenntnis der Pulslaufzeit die Frequenzverschiebung auf Grund der Temperaturveränderung ortsaufgelöst zu bestimmen. Auch in dieser Ausgestaltung der Erfindung lässt sich also durch die Auswertung der (rückgestreuten) optischen Signale die Temperatur an jedem beliebigen Punkt des Lichtwellenleiters bestimmen.

In einer weiteren Ausführungsform des erfindungsgemäßen Verfahrens/Einrichtung ist vorgesehen, die Temperatur über die Auswertung von optischen Signalen, wie sie durch Streuung am Bragg-Gitter entstehen, zu messen. Bragg-Gitter sind in den Lichtwellenleiter eingeschriebene, optische Bandfilter, welche nahezu beliebig oft im Lichtwellenleiter platziert werden können. Die Mittenwellenzahl des Bandstopps ergibt sich dabei aus der Bragg-Bedingung. Die spektrale Breite des Bandstopps hängt neben der Gitterlänger und der Brechzahl von der Temperatur ab. Die Messeinrichtung ist dann entsprechend dazu ausgebildet, bei gegebener und über den Lichtwellenleiter verschiedener Gitterlänge und Brechzahl die Temperatur an der jeweiligen Stelle des Bragg-Gitters über die Breite des Bandstopps zu bestimmen.

Auf Grund der hohen Auflösung der erfindungsgemäßen Temperaturmessmethode kann die Isttemperaturverteilung bevorzugt als eine dreidimensionale Isttemperaturverteilung bzw. als ein dreidimensionales Isttemperaturprofil gemessen werden. Das heißt insbesondere, dass die Temperatur für eine Mehrzahl an dreidimensional im Raum verteilter Messorte genau angegeben werden kann. Hierzu wird der mindestens eine Lichtwellenleiter oder eine Mehrzahl an derartigen Lichtwellenleitern entlang der gewünschten Messorte verlegt, so dass sich der mindestens eine Lichtwellenleiter bzw. mehrere derartige Lichtwellenleiter von Messort zu Messort erstrecken. Die Messorte in dem Lichtwellenleiter liegen dabei sehr dicht beieinander, da die vorgenannten Auswertemethoden eine vergleichsweise hohe räumliche Auflösung aufweisen.

Weiterhin weist die erfindungsgemäße Einrichtung bevorzugt eine Auswerteeinheit auf, die dazu ausgebildet ist, aus dem momentanen Temperaturprofil ein momentanes Konzentrationsprofil einer den mindestens einen Kolonneneinbau benetzenden flüssigen Phase und/oder ein Konzentrationsprofil einer den mindestens einen Kolonneneinbau im Gegenstrom durchströmenden gasförmigen Phase zu ermitteln.

Zum Regeln der Temperatur bzw. der Konzentration der Phasen in der Kolonne weist die Einrichtung bevorzugt einen Flüssigkeitsverteiler auf (oder mehrere Flüssigkeitsverteiler), der dazu ausgebildet ist, die flüssige Phase variabel auf den mindestens einen Kolonneneinbau zu verteilen, wobei jener Flüssigkeitsverteiler dazu ausgebildet ist, die flüssige Phase in radialer Richtung des Einbaus und/oder in Umfangsrichtung des mindestens einen Kolonneneinbaus variabel zu verteilen.

Hierbei weist die Einrichtung bevorzugt ein Regelmittel auf, dass dazu ausgebildet ist, den Flüssigkeitsverteiler derart zu regeln bzw. zu steuern, dass das momentane Konzentrationsprofil der flüssigen Phase einem gewünschten Konzentrationsprofil (Soll-Konzentrationsprofil) der flüssigen Phase angenähert wird und/oder dass das momentane Konzentrationsprofil der gasförmigen Phase einem gewünschten Konzentrationsprofil (Soll-Konzentrationsprofil) der gasförmigen Phase angenähert wird.

Der Flüssigkeitsverteiler kann hierzu eine Mehrzahl an Verteilerarmen aufweisen, die insbesondere jeweils in radialer Richtung des Einbaus bzw. des Kolonnenmantels erstreckt sind. Diese Verteilerarme können zum variablen Verteilen des Stromes der flüssigen Phase in radialer Richtung zumindest in zwei separate Segmente unterteilt sein, die jeweils zumindest eine Durchgangsöffnung aufweisen, durch die hindurch Flüssigkeit auf den jeweiligen Einbau aufgebbar ist, wobei das Regelmittel dazu eingerichtet und vorgesehen ist, eine Zufuhr von Flüssigkeit in die beiden Segmente oder auch in mehrere Segmente separat zu regeln, so dass die Flüssigkeit in radialer Richtung des Mantels auf die Kolonneneinbauten variabel aufgebbar ist.

Alternativ oder ergänzend können die Verteilerarme dazu eingerichtet und vorgesehen sein, entlang der radialen Richtung des jeweiligen Einbaus unterschiedliche radiale Sektionen des jeweiligen Einbaus mit der flüssigen Phase zu beaufschlagen. So kann zum Beispiel zumindest ein Verteilerarm dazu vorgesehen sein, entlang der radialen Richtung des Einbaus eine erste Sektion mit Flüssigkeit zu beaufschlagen, und zumindest ein anderer Verteilerarm kann dazu vorgesehen sein, entlang der radialen Richtung des Einbaus eine davon verschiedene zweite Sektion des Einbaus mit Flüssigkeit zu beaufschlagen, wobei insbesondere die beiden Verteilerarme zum Verteilen der Flüssigkeit auf die beiden Sektionen je zumindest eine Durchgangsöffnung aufweisen, durch die hindurch Flüssigkeit auf das Rohrbündel aufgebbar ist, wobei jene Durchgangsöffnung entlang der radialen Richtung unterschiedlich positioniert sind und wobei insbesondere zum Speisen der Verteilerarme mit der Flüssigkeit eine Mehrzahl an Fallrohren vorgesehen sein können, wobei ein Fallrohr je zumindest einen Verteilerarm mit Flüssigkeit beaufschlagt, und wobei insbesondere die Fallrohre in einem Kernrohr der Kolonne angeordnet sein können oder durch eine Unterteilung des Kernrohrs in Sektionen gebildet sein können.

Es ist aber auch denkbar, einen herkömmlichen nicht regelbaren Flüssigkeitsverteiler zu verwenden und zusätzlich einen Strom der flüssigen Phase im Mantelraum variabel auf den jeweiligen Einbau in radialer Richtung und/oder Umfangsrichtung zu verteilen. Weitere Einzelheiten und Vorteile der Erfindung sollen durch die nachfolgende Figurenbeschreibung eines Ausführungsbeispieles an Hand der Figur erläutert werden.

Es zeigt:
- Fig. 1: eine schematische Schnittansicht einer erfindungsgemäßen Einrichtung zur Durchführung des erfindungsgemäßen Verfahrens; und
- Fig. 2: eine Draufsicht auf einen Abschnitt des Lichtwellenleiters gemäß Figur 1.

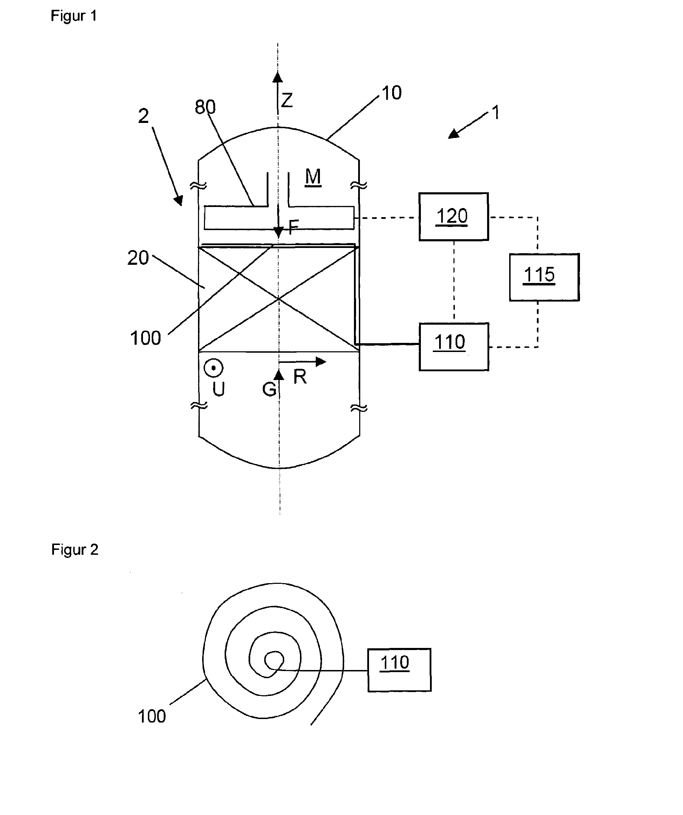

Fig. 1 zeigt eine erfindungsgemäße Einrichtung 1, mit einer Kolonne 2 zum Stoff- und/oder Energieaustausch zwischen zumindest einer flüssigen Phase F und einer gasförmigen Phase G, wobei die Kolonne 2 einen entlang einer Längsachse bzw. der Vertikalen Z erstreckten, drucktragenden Mantel 10 aufweist, der einen Mantelraum M der Kolonne 2 begrenzt, wobei in dem Mantelraum M zumindest ein Kolonneneinbau 20, insbesondere mehrere Kolonneneinbauten 20, vorgesehen sind, die entlang der Längsachse Z der Kolonne 2 übereinander angeordnet sind, wobei in der Fig. 1 der Einfachheit halber lediglich ein derartiger Kolonneneinbau 20 gezeigt ist. Bei einem solchen Kolonneneinbau 20 handelt es sich vorliegend vorzugsweise um eine Füllkörperschüttung oder eine strukturierte Packung. Bei einer Füllkörperschüttung sind dabei eine Mehrzahl an Füllkörper regellos aufeinander angeordnet, so dass eine hohe effektive Oberfläche entsteht, an der sich die flüssige Phase F anlagern kann, so dass zwischen der flüssigen Phase F und der gasförmigen Phase G eine möglichst große Phasengrenzfläche in der Kolonne 2 ausgebildet wird. Bei einer strukturierten Packung 20 hingegen sind üblicherweise eine Mehrzahl an Lagen eines Packungsmaterials in einer regelmäßigen geometrischen Beziehung zueinander angeordnet, beispielsweise parallel zueinander, wobei diese einzelnen Lagen Packungskanäle ausbilden, durch die die gasförmige Phase G die strukturierte Packung von unten nach oben durchströmen kann, wobei die jeweiligen Lagen durch die von oben aufgegebene flüssige Phase F benetzt werden. Auf diese Weise wird auch bei der strukturierten Packung 20 eine große effektive Oberfläche erzeugt, die eine entsprechend große Phasengrenzfläche zwischen den beiden Phasen F, G ermöglicht. Weiterhin sind als Kolonneneinbauten auch Kolonnenböden (Austauschböden) denkbar. Eine Kombination derartiger Einbauten kann natürlich ebenfalls in einer Kolonne verwendet werden.

Um die beim Stoff- und/oder Energieaustausch sich einstellende Konzentrationsprofile der beiden Phasen F, G in dem mindestens einen Kolonneneinbau 20 insbesondere in radialer Richtung R zu optimieren, ist vorgesehen, das in dem mindestens einen Kolonneneinbau sich einstellende Temperaturprofil zwei- bzw. dreidimensional zu vermessen. Bei den radialen Richtungen R handelt es sich dabei jeweils um Richtungen, die ausgehend von der Längsachse Z senkrecht auf der Längsachse Z des Mantels 10 der Kolonne 2 stehen und dabei zum Kolonnenmantel 10 weisen, der insbesondere konzentrisch zur Längsachse z umläuft.

Zum Vermessen der momentanen Temperaturprofile (vorzugsweise in Echtzeit) ist zumindest ein Lichtwellenleiter 100 vorgesehen, der - wie in Figur 2 angedeutet - vorzugsweise spiralförmig (die Längsachse Z umlaufend) auf dem mindestens einen Kolonneneinbau 20 verlegt ist (insbesondere bei einer strukturierten Packung), so dass aufgrund der Vielzahl von Temperaturmesspunkten, die sich entlang des mindestens einen Lichtwellenleiters 100 ergeben, ein im Wesentlichen zweidimensionales Temperaturprofil abgetastet werden kann. Wird der mindestens eine Lichtwellenleiter 100 in mehreren Ebenen derartig verlegt (z.B. auf mehreren Einbauten) kann ein dreidimensionales Temperaturprofil erhalten werden. Insbesondere bei Kolonneneinbauten in Form von Schüttungen kann der Lichtwellenleiter 100 auch helixförmig entlang der Längsachse Z durch den Kolonneneinbau verlaufen.

Der mindestens eine Lichtwellenleiter 100 ist zum Bestimmen des jeweiligen momentanen Temperaturprofils mit einer Messeinrichtung 110 gekoppelt, die dazu ausgebildet ist, Licht in den mindestens einen Lichtwellenleiter 100 einzustrahlen und durch Auswertung des zurückgestreuten Lichtes die Temperatur entlang des Lichtwellenleiters 100 zu bestimmen. Hieraus ergibt sich das besagte momentane Temperaturprofil. Die Messeinrichtung 110 ist dabei bevorzugt mit einer Auswerteeinheit 115 gekoppelt, die dazu ausgebildet ist, aus dem jeweiligen momentanen Temperaturprofil, das während des Betriebes der Kolonne 2 wiederholt ermittelt wird, ein jeweiliges Konzentrationsprofil in dem betreffenden Kolonneneinbau 20 zu berechnen. Hierbei kann es sich um die Konzentration der gasförmigen und/oder flüssigen Phase F, G handeln.

Um nun insbesondere einer ungleichen Verteilung der flüssigen Phase F auf den mindestens einen Kolonneneinbau 20 entgegenwirken zu können, ist die Messeinrichtung 110 bzw. die Auswerteeinheit 115 mit einem Regelmittel 120 gekoppelt, das vorliegend einen Flüssigkeitsverteiler 80 steuert, der dazu ausgebildet ist, die flüssige Phase F insbesondere in radialer Richtung R des mindestens einen Kolonneneinbaus 20 und/oder in einer die Längsachse Z umlaufende Umfangsrichtung U des mindestens einen Kolonneneinbaus 20 variabel zu verteilen. Hierdurch kann die Temperaturverteilung bzw. die Konzentrationsverteilung, die während des Betriebes insbesondere in Echtzeit laufend gemessen wird, gezielt beeinflusst werden, so dass die momentanen Temperatur- bzw. Konzentrationsprofile mit Vorteil einem jeweils zugeordneten Sollprofil angenähert werden können.

**Bezugszeichenliste**

| | |
|---|---|
| 1 | Einrichtung |
| 2 | Kolonne |
| 10 | Mantel |
| 20 | Kolonneneinbau |
| 80 | Flüssigkeitsverteiler |
| 100 | Lichtwellenleiter |
| 110 | Messeinrichtung |
| 120 | Regelmittel |
| F | Flüssige Phase |
| G | Gasförmige Phase |
| M | Mantelraum |
| R | Radiale Richtung Kolonneneinbau |
| U | Umfangsrichtung |
| Z | Vertikale bzw. Kolonnenlängsachse |

## Patentansprüche

1. Verfahren zum Messen eines Temperaturprofils in einer Kolonne zum Stoff-und/oder Energieaustausch, bei dem mittels zumindest eines in der Kolonne (2) angeordneten Lichtwellenleiters (100), insbesondere in Form einer Glasfaser, ein momentanes Temperaturprofil in zumindest einem Kolonneneinbau (20) der Kolonne (2) gemessen wird, wobei Licht in den Lichtwellenleiter (100) eingekoppelt wird und im Lichtwellenleiter gestreutes Licht zur Ermittlung des momentanen Temperaturprofils ausgewertet wird.

2. Verfahren nach Anspruch 1, **dadurch gekennzeichnet, dass** als momentanes Temperaturprofil ein zwei- oder dreidimensionales momentanes Temperaturprofil des mindestens einen Kolonneneinbaus (20) gemessen wird.

3. Verfahren nach Anspruch 1 oder 2, **dadurch gekennzeichnet, dass** der mindestens eine Lichtwellenleiter (100) zum Messen des momentanen Temperaturprofils spiralförmig und/oder helixförmig verläuft.

4. Verfahren nach einem der vorhergehenden Ansprüche, **dadurch gekennzeichnet, dass** der mindestens eine Kolonneneinbau (20) mit einer flüssigen Phase (F) beaufschlagt wird und im Gegenstrom eine gasförmige Phase (G) durch den mindestens einen Kolonneneinbau (20) hindurchgeführt wird, so dass die beiden Phasen (F, G) in dem mindestens einen Kolonneneinbau (20) in einen Stoff- und/oder Energieaustausch treten.

5. Verfahren nach einem der vorhergehenden Ansprüche, **dadurch gekennzeichnet, dass** der mindestens eine Kolonneneinbau (20) durch eine Füllkörperschüttung, eine strukturierte Packung, oder zumindest einen oder mehrere Kolonnenboden gebildet ist.

6. Verfahren nach Anspruch 4, **dadurch gekennzeichnet, dass** anhand des momentanen Temperaturprofils ein momentanes Konzentrationsprofil der den mindestens einen Kolonneneinbau (20) benetzenden flüssigen Phase (F) und/oder der den Kolonneneinbau (20) im Gegenstrom durchströmenden gasförmigen Phase (G) ermittelt wird.

7. Verfahren nach Anspruch 6, **dadurch gekennzeichnet, dass** die flüssige Phase (F) derart auf den mindestens einen Kolonneneinbau (20) gegeben wird, dass das momentane Konzentrationsprofil der flüssigen Phase (F) in dem mindestens einen Kolonneneinbau (20) einem gewünschten Konzentrationsprofil der flüssigen Phase (F) angenähert wird und/oder dass das momentane Konzentrationsprofil der gasförmigen Phase (G) in dem mindestens einen Kolonneneinbau (20) einem gewünschten Konzentrationsprofil der gasförmigen Phase (G) angenähert wird.

8. Verfahren nach einem der vorgehenden Ansprüche, **dadurch gekennzeichnet, dass** die flüssige Phase (F) derart auf den mindestens einen Kolonneneinbau (20) gegeben wird, dass das momentane Temperaturprofil des mindestens einen Kolonneneinbaus (20) einem gewünschten Temperaturprofil angenähert wird.

9. Einrichtung, mit:
- einer Kolonne (2) zum Stoff- und/oder Energieaustausch,
- zumindest einem Kolonneneinbau (20) der Kolonne (2) zur Aufnahme einer flüssigen Phase (F), und
- zumindest einem in oder auf dem mindestens einen Kolonneneinbau (20) angeordneten Lichtwellenleiter (100), insbesondere in Form einer Glasfaser, zum Messen eines insbesondere zwei- oder dreidimensionalen, momentanen Temperaturprofils in dem mindestens einen Kolonneneinbau (20), wobei insbesondere der mindestens eine Kolonneneinbau (20) durch eine Füllkörperschüttung, eine strukturierte Packung, oder zumindest einen oder mehrere Kolonnenböden gebildet ist.

10. Einrichtung nach Anspruch 9, **dadurch gekennzeichnet, dass** der mindestens eine Lichtwellenleiter (100) sich spiralförmig und/oder helixförmig erstreckt.

11. Einrichtung nach Anspruch 9 oder 10, **gekennzeichnet durch** eine mit dem mindestens einen Lichtwellenleiter (100) verbundene Messeinrichtung (110), die dazu ausgebildet ist, Licht in den mindestens einen Lichtwellenleiter (100) einzukoppeln und in dem mindestens einen Lichtwellenleiter (100) gestreutes Licht zur Ermittlung des momentanen Temperaturprofils auszuwerten.

12. Einrichtung nach einem der Ansprüche 9 bis 11, **dadurch gekennzeichnet, dass** eine Auswerteeinheit (115) vorgesehen ist, die dazu ausgebildet ist, aus dem momentanen Temperaturprofil ein momentanes Konzentrationsprofil einer den mindestens einen Kolonneneinbau (20) benetzenden flüssigen Phase (F) und/oder ein Konzentrationsprofil einer den mindestens einen Kolonneneinbau (20) im Gegenstrom durchströmenden gasförmigen Phase (G) zu ermitteln.

13. Einrichtung nach einem der Ansprüche 9 bis 12, **dadurch gekennzeichnet, dass** die Kolonne einen Flüssigkeitsverteiler (80) aufweist, der dazu ausgebildet ist, die flüssige Phase (F) variabel auf den mindestens einen Kolonneneinbau (20) zu verteilen, wobei der Flüssigkeitsverteiler (80) insbesondere dazu ausgebildet ist, die flüssige Phase (F) in radialer Richtung (R) und/oder in Umfangsrichtung (U) des mindestens einen Kolonneneinbaus (20) variabel zu verteilen.

14. Einrichtung nach Anspruch 13, **gekennzeichnet durch** ein Regelmittel (120), das dazu ausgebildet ist, den Flüssigkeitsverteiler (80) derart zu regeln, dass das momentane Konzentrationsprofil der flüssigen Phase (F) einem Sollkonzentrationsprofil der flüssigen Phase (F) angenähert wird und/oder dass das momentane Konzentrationsprofil der gasförmigen Phase (G) einem Sollkonzentrationsprofil der gasförmigen Phase (G) angenähert wird, und/oder dass das momentane Temperaturprofil einem Solltemperaturprofil angenähert wird.
